# EUROPÄISCHE PATENTANMELDUNG

(11) **EP 0 812 786 A2**
(43) Veröffentlichungstag der Anmeldung: **17.12.1997**
(21) Anmeldenummer: 97109272.1
(22) Anmeldetag: 07.06.1997
(51) Int. Cl.: B65G 1/02

(54) **Regalvorrichtung**

(30) Priorität: 10.06.1996 DE 19623176
(71) Anmelder: LBL LAGER- UND BETRIEBSTECHNIK GMBH, D-68519 Viernheim (DE)
(72) Erfinder: Kühner, Daniel, 67435 Neustadt (DE); Altun, Ali, 69469 Weinheim (DE)
(74) Vertreter: Schmid, Rudolf, Dipl.-Ing., Patentanwalt

(57) **Zusammenfassung**

Die Erfindung betrifft eine Regalvorrichtung bestehend aus mindestens zwei Tragrahmen auf denen die Lagerplätze für das zu lagernde Gut etagenweise angeordnet sind und die Lagerplätze jeder Etage durch quer zur Regallängsachse ein- und ausfahrbaren Trägern gebildet sind, die mit Spindelwellen, die die Tragrahmen verbinden, derart zusammenwirken, daß die Rotationsbewegung der Spindelwellen das Ein- und Ausfahren der Träger bewirkt. Dieser Regalbetrieb wird bei den bekannten Anlagen dadurch vorgenommen, daß in jeder Lagerebene, die genutzt wird, eine Kurbel anzusetzen ist. Die neue Regalvorrichtung sieht ein zentrales Bedienungselement vor, von dem aus jede Spindelwelle einzeln über ein Kupplungssystem aktiviert werden kann.

## Beschreibung

Die Erfindung betrifft eine Regalvorrichtung, bestehend aus mindestens zwei Tragrahmen auf denen die Lagerplätze für das zu lagernde Material etagenweise angeordnet sind und die Lagerplätze jeder Etage durch quer zur Regallängsachse ein- und ausfahrbaren Träger gebildet sind, die mit Spindelwellen, die die Tragrahmen verbinden derart zusammenwirken, daß die Rotationsbewegung der Spindelwellen das Ein- und Ausfahren der Träger bewirkt.

Regalvorrichtungen der eingangs genannten Gattung sind beispielsweise aus der US-PS 3,708,074 bekannt.

Mit den bekannten Lagersystemen wird eine erhöhte tagerkapazität erreicht, wobei das zu lagernde Material günstig zu erreichen ist. Die Regale sind mit rollbaren Tragarme ausgestattet, die ein- bzw. ausgefahren werden können und gleichzeitig die Lagerplätze bilden. Im ausgefahrenen Zustand kann manuell oder durch geeignete Hebezeuge (wie Krananlage oder Stapler) das Lagergut aus günstigen Positionen entnommen oder eingelagert werden. Diese Lagersysteme eignen sich u.a. zur Aufnahme von Rundstählen, Stabstählen, Röhren etc. verschiedenster Längen, wobei die Rundstähle auf die ausgefahrenen, in die Regalgasse ragenden Träger aufgelegt werden, so daß sie sich parallel zur Regallängsseite auf den Tragarmen befinden. Das Einfahren in das Regal erfolgt praktisch durch Parallelverschiebung der Rundstähle, indem die Tragarme der Regalvorrichtung quer zur Stablängsachse ein- und ausfahren. Selbstverständlich können auch andere Lagergüter aufgenommen werden, wenn die Tragarme beispielsweise mit Platten oder Wannen bestückt werden.

Zum Zwecke des Ein- und Ausfahrens des Lagergutes bzw. der Tragarme ist es allerdings nötig, jeweils eine Handkurbel zu der Lagerebene umzusetzen, die das benötigte Lagergut beinhaltet. Dies bedeutet, daß für die Bedienungsperson oft schwierigste Hebelverhältnisse vorliegen, um den Ein- oder Ausfahrvorgang zu vollziehen. Wird das Material der obersten Ebene benötigt, so ist die Kurbel am Stirnrahmen des Regals an der obersten Ansatzstelle anzubringen, die eventuell nur mit einer Leiter erreichbar ist. Die Kurbelbewegung muß die Bedienungsperson dann auf der Leiter stehend vollziehen. Dies bedeutet nicht nur eine erhöhte7 Unfallgefahr, sondern auch, daß die Bedienung der Regalvorrichtung sich als höchst umständlich erweist.

Der im Hauptanspruch angegebenen Erfindung liegt das Problem zugrunde, das Umsetzen der Kurbel von einer Lagerebene zur Anderen zu vermeiden und die Voraussetzung dafür zu schaffen, bei Bedarf von der manuellen Betätigung der Regalvorrichtung abrücken zu können.

Dieses Problem wird durch die im Hauptanspruch aufgeführten Merkmale gelöst.

Die mit der Erfindung erzielten Vorteile bestehen insbesondere darin, daß statt einer entsprechend der Anzahl der Lagerebenen vorhandenen Kurbelstellen nun von einem auch ergonomisch günstigen Platz aus alle Lagerebenen kontaktiert werden können. Eine vorteilhafte Ausgestaltung der vorliegenden Erfindung ist in den Unteransprüchen gekennzeichnet.
Die Weiterbildung nach Patentanspruch 2 erlaubt es nur die Lagerebene zu aktivieren, die gerade benötigt wird, ohne dabei das Antriebselement ebenfalls auf dieser Lagerebene anzusetzen. Unterstützt wird dies durch eine vorteilhafte Ausgestaltung der Erfindung gemäß Anspruch 4.
Durch die Anordnung eines zentralen Bedienelementes mit einer Wählstation, kann das zentrale Bedienelement auf die jeweilige Lagerebene geschaltet werden.
Bei einer besonders bevorzugten Weiterbildung der Erfindung gemäß Anspruch 5 und 6 ist vorgesehen, diese Wählstation durch einen verschiebbaren Hebel zu bedienen, welcher die Wirkverbindung über ein Schaltgestänge zu den jeweiligen Kupplungen herstellt.

Eine vorteilhafte Ausgestaltung der Erfindung ist im Patentanspruch 7 angegeben. Die geöffneten Kupplungen verhindern es, daß die Lagerplätze ungewollt ausrollen, indem hier jeweils die Spindelwelle arretiert wird.

Bei einer besonders bevorzugten Ausführungsform der vorliegenden Erfindung ist gemäß den Unteransprüchen 8 und 9 vorgesehen, daß die Übertragungsmittel zwischen Kurbel und Kupplungen bzw. den Spindelwellen als Ketten vorliegen, da sich die formschlüssige Einleitung der Kurbelkräfte für die vorliegenden Gewichtsverhältnisse eignet.

Anstelle einer für die manuelle Betätigung vorgesehenen Handkurbel ist es durch die vorliegende Erfindung aber auch möglich, an dem zentralen Bedienungselement einen motorischen Antrieb, gemäß Patentanspruch 10 vorzusehen.

Mit dem vorliegenden Erfindungsgedanken kann bei einer einfachsten Ausführungsform beispielsweies ein Einzelregal betrieben werden, das aus übereinander angeordneten Lagerplätzen besteht, bei denen die Tragarme in nur eine Richtung ausfahren. Ein solches Regal kann nach der Erfindung auch doppeltseitig ausgeführt werden, wobei dann beidseits Tragarme ausfahren. Hierbei ist jede Regalseite mit einem zentralen Bedienungselement versehen oder auch hier für beide Regalseiten eine Bedienungszentrale angeordnet.

Ein Ausführungsbeispiel der Erfindung ist in den Zeichnungen dargestellt und wird im folgenden näher beschrieben.

Es zeigen:
Figur 1 eine Regalvorrichtung in der Ansicht aus der sogenannten Regalgasse,
Figur 2 das in Figur 1 mit A gekennzeichnete Detail in einer Vergrößerung,
Figur 3 eine Frontansicht aus der in Figur 1 angedeuteten Richtung B mit erkennbarem zentralen Bedienungselement,
Figur 4 die Wählstation des Bedienungselementes und Figur 5 eine Einzelkupplung.

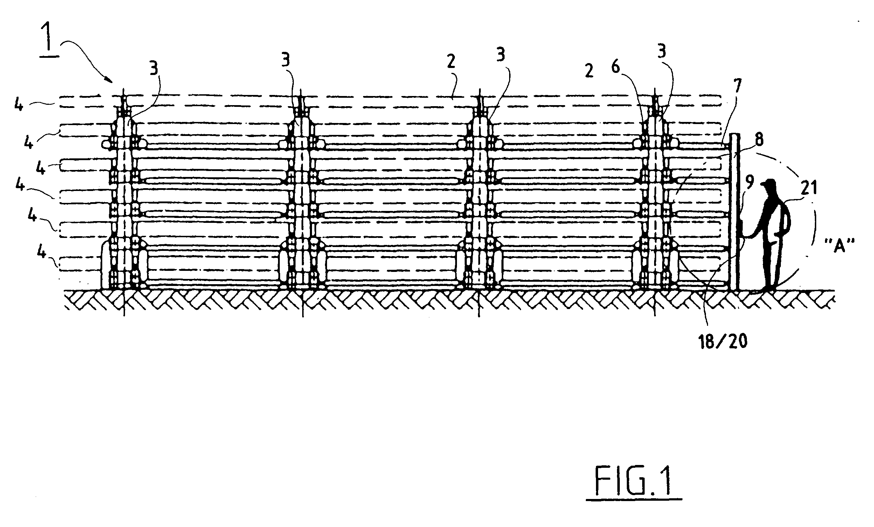

Die Figuren 1 bis 5 zeigen ein Ausführungsbeispiel für Stab- und Langgutmateriallagerung.

Die Figur 1 zeigt eine Regalvorrichtung 1. Mit dem Bezugszeichen 2 ist das zu lagernde Stab- oder Langgutmaterial gekennzeichnet. Die Regalvorrichtung 1 wird durch Tragrahmen 3 gebildet, auf denen die einzelnen Lagerplätze 4 angeordnet sind. Die Lagerplätze 4 sind etagenförmig übereinander angeordnet, so daß immer eine bestimmte Menge an Stab- und Langgutmaterial 2 in einer Etage aufgenommen werden kann. Zwischen den Tragrahmen 3 sind diese verbindende Spindelwellen 7 angeordnet, wobei jedem Lagerplatz 4 bzw. jeder Etage eine Spindelwelle 7 zugeordnet ist. Diese Spindelwellen 7 wirken mit den Trägern 6 zusammen, auf denen das Stab- und Langgutmaterial 2 aufliegt. Diese Träger 6 sind quer zur Stab- und Langgutmateriallängsachse in die Regalgasse ausfahrbar. Durch die Rotationsbewegung der Spindelwellen wird ein Ausfahren der Träger 6 bzw. ein Einfahren dieser bewirkt.

Am vorderen Teil der Regalvorrichtung ist erfindungsgemäß ein zentrales Bedienungselement 9 vorgesehen, das von einer Person 21 nutzbar ist. Dieses zentrale Bedienungselement 9 ist so ausgelegt, daß beispielsweise von nur einem Punkt aus jeder Lagerplatz 4 irgendeiner Etage anwählbar und aktivierbar ist.

Die Kommunikation zwischen dem Bedienungselement 9 bzw. der ansetzbaren Kurbel 18 und den einzelnen Lagerplätzen 4, erfolgt über ein Kupplungssystem 8, das am besten in den nachfolgenden Figuren erläuterbar ist.

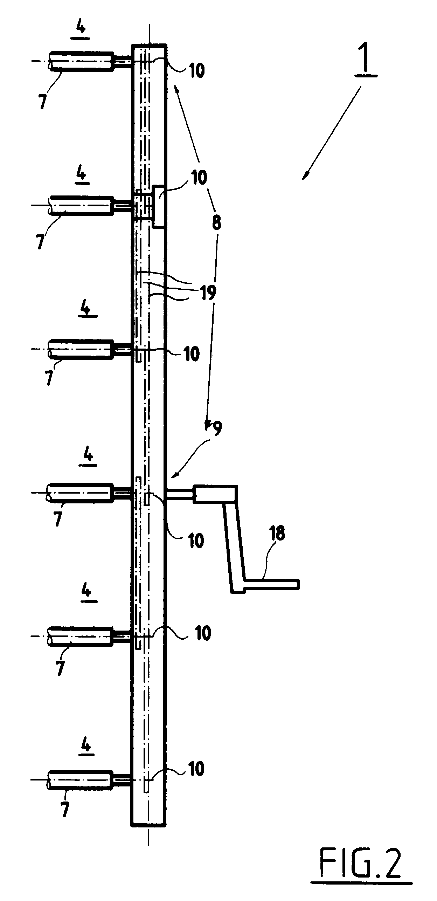

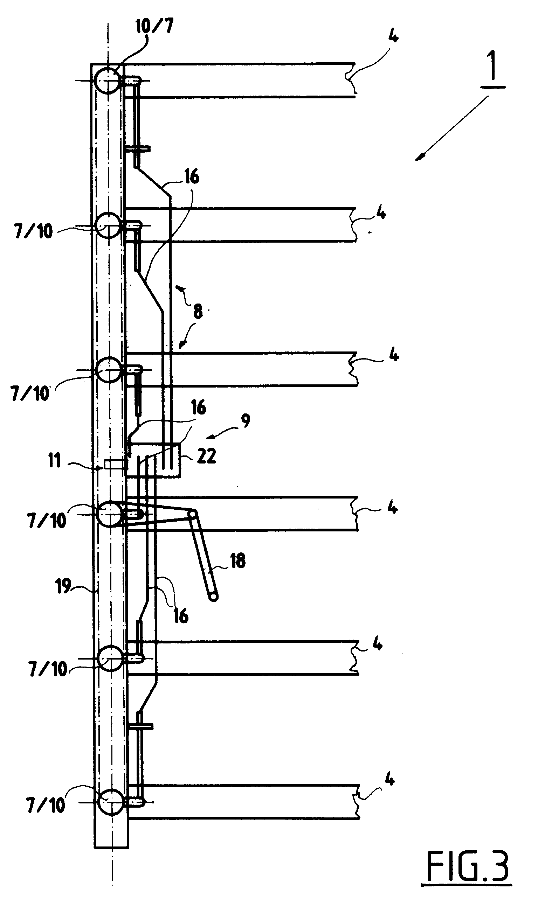

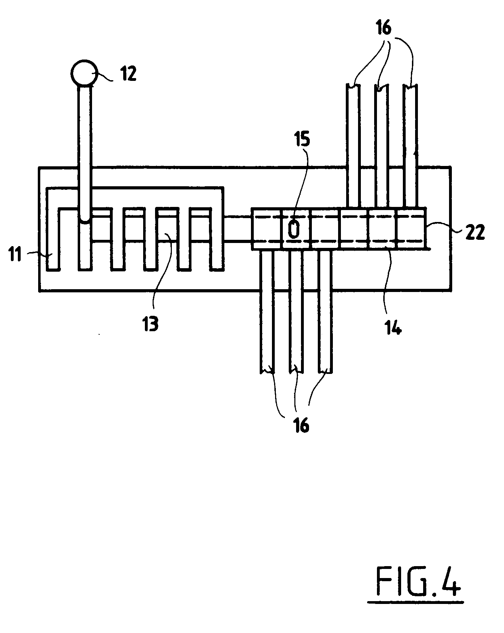

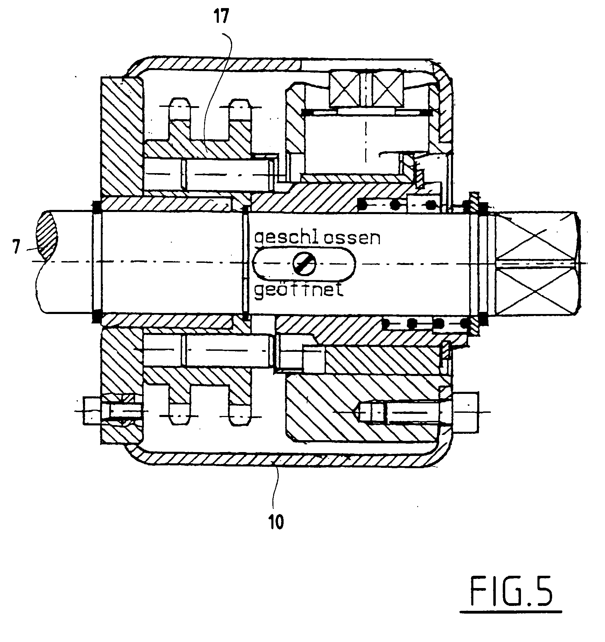

Die Figur 2 zeigt das in Figur 1 mit A gekennzeichnete Detail in einer Vergrößerung ohne Bedienungsperson.
In diesem Ausführungsbeispiel sind sechs Spindelwellen 7 vorgesehen, die jeweils Teil des Lagerplatzes 4 sind. Die Spindelwellen sind gebrochen dargestellt. In diesem Ausführungsbeispiel ist eine Kurbel 18 in Höhe des Bedienungselementes 9 angesetzt. Von diesem Bedienungselement 9 aus sind alle Lagerplätze bzw. Spindeln 7 betätigbar, so daß kein Umsetzen der Kurbel in die unterste oder beispielsweise oberste Spindelhöhe mehr nötig ist. Dies ermöglicht ein Kupplungssystem 8. Das gesamte Kupplungssystem 8 wird aus verschiedenen Einzelkomponenten gebildet. Zunächst ist auf jede Einzelkupplung 10 zu verweisen, die an jeder Spindel 7 bzw. auf deren Ende angeordnet ist. In Figur 2 ist der Einfachheit halber lediglich eine Kupplung 10 dargestellt, jedoch trägt jede Spindel 7 jeweils eine Kupplung 10. Neben den Kupplungen 10 wird das gesamte Kupplungssystem durch die Wählstation 11 (Figur 4) und durch eine Schaltvorrichtung 22 gebildet (Figur 3 und 4) die über ein Gestänge 16 mit den Kupplungen 10 kommuniziert. Es ist hierbei anzumerken, daß jede Kupplung 10 über ein Gestänge 16 kontaktiert wird. Die Spindelrotation wird über Ketten 19 bewirkt, die über Kettenräder 17 (Figur 5) der Kupplung 10 laufen.

Im Zusammenhang der Figuren 2 bis 5 wird nun nachfolgend die Funktion der vorliegenden Erfindung beschrieben.
Über den Hebel 12 der Wählstation 11 wird eine Spindel 13 innerhalb von Buchsen 14 der Schaltvorrichtung 22 verschoben, derart, daß je nach angewählten Lagerplatz eine ihr zugeordnete Buchse 14 mit einem entsprechenden Bolzen 15 in Wirkverbindung gebracht wird. Entsprechend der eingestellten Position über den Wahlhebel 12 wird das zugehörige Gestänge 16 bewegt, welches die Kupplung 10 ein- oder ausschaltet. Sodann wird durch die Bewegung der Kurbel 18 nur derjenige Lagerplatz 4 bzw. die zugehörige Spindelwelle 7 in Rotation versetzt, die zuvor angewählt wurde. Die Kurbel kann mit einer entsprechenden Übersetzung in den Kettentrieb eingreifen.

Dieses Ausführungsbeispiel ist jedoch nicht nur auf einen Kurbelbetrieb begrenzt, sondern gerade diese erfindungsgemäße Anordnung und Zuordnung des Kupplungssystems ermöglicht den Betrieb mit einem zentralen Motor.

### Bezugszeichenliste

- 1: Regalvorrichtung
- 2: Stab- und Langgutmaterial
- 3: Tragrahmen
- 4: Lagerplatz
- 5: -
- 6: Träger
- 7: Spindelwelle
- 8: Kupplungssystem
- 9: Bedienungselement
- 10: Kupplung
- 11: Wählstation
- 12: Hebel
- 13: Spindel
- 14: Buchse
- 15: Bolzen
- 16: Gestänge
- 17: Kettenrad
- 18: Kurbel
- 19: Ketten
- 20: Motor
- 21: Bedienungsperson
- 22: Schaltvorrichtung

## Patentansprüche

1. Regalvorrichtung bestehend aus mindestens zwei Tragrahmen auf denen die Lagerplätze für das zu lagernde Material etagenweise angeordnet sind und die Lagerplätze jeder Etage durch quer zur Regallängsachse ein- und
ausfahrbaren Trägern gebildet sind, die mit Spindelwellen, die die Tragrahmen verbinden derart zusammenwirken, daß die Rotationsbewegung der Spindelwellen das Ein- und Ausfahren der Träger bewirkt,
dadurch gekennzeichnet,
daß jede Spindelwelle (7) einzeln über ein Kupplungssystem (8) von nur einem zentralen Bedienungselement (9) aus aktivierbar ist.

2. Regalvorrichtung nach Anspruch 1,
dadurch gekennzeichnet,
daß jede Spindelwelle (7) mit einer öffen- und schließbaren Kupplung (10) in Wirkverbindung steht.

3. Regalvorrichtung nach Anspruch 2,
dadurch gekennzeichnet,
daß jede Spindelwelle (7) an ihren Bedienungselementseitigen Ende mit der Kupplung (10) formschlüssig adaptiert ist.

4. Regalvorrichtung nach Anspruch 1 - 3,
dadurch gekennzeichnet,
daß das zentrale Bedienungselement (9) eine Wählstation (11) vorsieht, deren einstellbare Position jeweils einer Kupplung (10) einer Spindelwelle (7) zugeordnet ist.

5. Regalvorrichtung nach Anspruch 4,
dadurch gekennzeichnet,
daß die Wählstation (11) eine Schaltvorrichtung (22) vorsieht, mittels der die jeweilige Kupplung (10) ein- und ausschaltbar ist.

6. Regalvorrichtung nach Anspruch 5,
dadurch gekennzeichnet,
daß die Wählstation (11) einen verschiebbaren Hebel (12) vorsieht, der eine Spindel (13) innerhalb von Buchsen (14) bewegt, und je nach gewählter Lagerebene einen Bolzen (15) mit der jeweiligen Buchse (14) in Wirkverbindung bringt, die über ein Gestänge (16) die jeweils Kupplung (10) ein- und ausschaltet.

7. Regalvorrichtung nach Anspruch 1 bis 6,
dadurch gekennzeichnet,
daß in geöffnetem Zustand der Kupplung (10) die Spindelwelle (7) arretiert ist.

8. Regalvorrichtung nach Anspruch 7,
dadurch gekennzeichnet,
daß auf den Kupplungen (10) Kettenräder (17) angeordnet sind.

9. Regalvorrichtung nach Anspruch 8,
dadurch gekennzeichnet,
daß mit den Kettenrädern (17), über eine an den zentralen Bedienungselement (9) ansetzbaren Kurbel (18) bewegbare Ketten (19) zusammenwirken.

10. Regalvorrichtung nach Anspruch 8,
dadurch gekennzeichnet,
daß die Ketten (19) über einen Motor (20) an dem zentralen Bedienungselement(9) antreibbar sind.
